# EUROPEAN PATENT SPECIFICATION

(11) **EP 2 846 064 B1**
(45) Date of publication and mention of the grant of the patent: **05.06.2019**
(21) Application number: 14163791.8
(22) Date of filing: 08.04.2014
(51) Int. Cl.: F16G 5/10

(54) **V-belt, belt-type transmission and straddle-type vehicle**
Keilriemen, Riemenantrieb und Grätschsitzfahrzeug
Courroie trapézoïdale, transmission à courroie et véhicule de type à califourchon

(30) Priority: 29.08.2013 JP 2013177448
(43) Date of publication of application: 11.03.2015
(73) Proprietor: Yamaha Hatsudoki Kabushiki Kaisha, Iwata-shi, Shizuoka 438-8501 (JP)
(72) Inventor: Takada, Kazuyoshi, Iwata-shi, Shizuoka 438-8501 (JP)
(74) Representative: Grünecker Patent- und Rechtsanwälte PartG mbB

(56) References cited:
- EP-A1- 0 368 721
- EP-A1- 2 584 217
- WO-A1-93/07403
- WO-A1-2009/153816
- GB-A- 2 013 303
- JP-A- H04 175 538
- US-A- 4 022 070

## Description

The present invention relates to V-belts, belt-type transmissions and straddle-type vehicles.

Prior art document EP 2 584 217 A1 discloses a V-belt comprising: an intermediate rubber layer in which cores are embedded; an upper rubber layer provided above the intermediate rubber layer; and a lower rubber layer provided below the intermediate rubber layer, wherein the cores are not exposed through a left lateral surface of the intermediate rubber layer and a right lateral surface of the intermediate rubber layer.

Prior art document US 4,022,070 discloses a V-belt comprising: an intermediate rubber layer in which cores are embedded; an upper rubber layer provided above the intermediate rubber layer; and a lower rubber layer provided below the intermediate rubber layer, wherein a length of a portion of the core exposed through the left lateral surface of the intermediate rubber layer or a length of a portion of the core exposed through the right lateral surface of the intermediate rubber layer are each equal to or less than a half of a length of the core.

Prior art document WO 93/07403 discloses in figure 5 a V-belt according to the preamble of claim 1 and in figure 2 a V-belt with cores that are not exposed through a left lateral surface and a right lateral surface of a rubber layer, wherein an angle formed by the leftmost core with respect to a longitudinal direction of the V-belt and an angle formed by the rightmost core with respect to the longitudinal direction of the V-belt are each greater than an angle formed by the centermost core in the width direction of the V-belt with respect to the longitudinal direction of the V-belt.

A belt-type transmission is conventionally used as a transmission for a straddle-type vehicle, for example. A belt-type transmission includes a driving pulley, a driven pulley, and a V-belt wound around the driving and driven pulleys. Normally, the driving and driven pulleys each include: a fixed sheave unmovable in an axial direction of a pulley shaft; and a movable sheave movable in the axial direction. A V-shaped groove (hereinafter referred to as a "V groove") around which the V-belt is to be wound is provided between the fixed and movable sheaves. The V-belt is sandwiched between the fixed and movable sheaves inside the V groove. The V-belt is substantially V-shaped in cross section so as to conform to the V groove. A change in width of the V groove causes a change in diameter of the V-belt wound around the driving and driven pulleys. A change in diameter of the V-belt wound around the driving and driven pulleys causes a change in transmission ratio.

Examples of known V-belts include a V-belt that includes: an intermediate rubber layer in which cores are embedded; an upper rubber layer provided above the intermediate rubber layer; and a lower rubber layer provided below the intermediate rubber layer. Patent Literature 1 discloses a V-belt that includes: an adhesion rubber layer (equivalent to the intermediate rubber layer) in which cores are embedded; an upper rubber layer provided on a back surface of the adhesion rubber layer; and a lower rubber layer provided on a bottom surface of the adhesion rubber layer. The upper rubber layer and/or the lower rubber layer are/is provided with a plurality of cogs.

It is known that a portion of a V-belt which is wound around a driving pulley and a driven pulley and located adjacent to a belt bottom surface (hereinafter referred to as a "belt lower portion") increases in width due to elastic deformation. Upon an increase in width of the belt lower portion, the belt lower portion is strongly pressed against a fixed sheave and a movable sheave. As a result, power transmission efficiency is reduced. To cope with this, in a belt-type transmission disclosed in JP 2004-270708 A, an angle between belt lateral surfaces (hereinafter referred to as a "belt angle") is set at an angle greater than a groove angle of each pulley across the entire adhesion rubber layer in which the cores are embedded and the entire lower rubber layer in a uniform manner.

Normally, when a V-belt is fabricated, a wire by which cores are to be provided is spirally wound around a rotating roller provided with rubber at its surface, thus arranging the cores in a width direction of the V-belt. The cores function to transmit power from a driving pulley to a driven pulley. Therefore, in terms of the power transmission function, it is advantageous to wind the cores at minimum intervals because the number of the cores included in the V-belt can be increased. When the cores are wound without any interval, a large reactive force against a lateral pressure received from a sheave can be ensured in a low edge type V-belt, thus making the resulting V-belt advantageous also in terms of giving and receiving of power between the V-belt and the pulleys. At the time of fabrication of a V-belt, lateral surfaces of rubber including cores is cut into a V-shape. When the cores are wound without any interval, the cores are exposed through the lateral surfaces after cutting the lateral surfaces during the fabrication, and a length of the exposed portion is approximately equal to a length (circumferential length) of the V-belt. However, the following problems are encountered: (i) A friction coefficient of the core is lower than that of rubber, and therefore, a portion having a low friction coefficient exists across a length substantially equal to the circumferential length of the V-belt; and (ii) When the reactive force against the lateral pressure received from the sheave is large in a region where the core is located, the lateral pressure exerted on a rubber portion, located around the core and having a friction coefficient higher than that of the core, assumes a relatively low value. These problems (i) and (ii) make the V-belt disadvantageous in terms of giving and receiving of power between the V-belt and pulleys.

When one considers increasing a frictional force between a belt and a sheave with the aim of enhancing power transmission efficiency, exposure of cores is getting a great deal of attention as a problem rather than a slight increase or decrease in a friction coefficient of rubber.

It is the object of the present invention to provide a V-belt capable of enhancing power transmission efficiency to a degree not heretofore attained, and a belt-type transmission and a straddle-type vehicle each including such a V-belt.

According to the present invention said object is solved by a V-belt having the features of independent claim 1. Preferred embodiments are laid down in the dependent claims.

A V-belt according to an embodiment of the present teaching includes: an intermediate rubber layer in which cores are embedded; an upper rubber layer provided above the intermediate rubber layer; and a lower rubber layer provided below the intermediate rubber layer, wherein a length of a portion of the core exposed through the left lateral surface of the intermediate rubber layer and a length of a portion of the core exposed through the right lateral surface of the intermediate rubber layer are each equal to or less than a half of a length of the core.

In the above-described V-belt, the cores are not exposed through the right and left lateral surfaces of the intermediate rubber layer, or the portion of the core exposed through the left lateral surface of the intermediate rubber layer and the portion of the core exposed through the right lateral surface of the intermediate rubber layer each have a length which is equal to or less than a half of the length of the core (and which includes zero). As used herein, the term "length of the core" refers to a length corresponding to a single turn of the cores when a plurality of the cores are connected to each other inside the intermediate rubber layer. The intermediate rubber layer in which the cores are embedded serves as a portion of the V-belt where a tension is produced, and also serves as a main portion of the V-belt through which power is transmitted from a driving pulley to a driven pulley. The right and left lateral surfaces of the intermediate rubber layer come into contact with a pair of sheaves of the driving pulley and a pair of sheaves of the driven pulley, thus allowing the V-belt to transmit a frictional force between the driving and driven pulleys in a favorable manner. As a result, the V-belt can transmit power from the driving pulley to the driven pulley in a favorable manner.

According to one preferred embodiment, a length of a portion of the core continuously exposed through the left lateral surface of the intermediate rubber layer and a length of a portion of the core continuously exposed through the right lateral surface of the intermediate rubber layer are each preferably equal to or less than a half of the length of the core.

Thus, power transmission efficiency can be further enhanced.

According to another preferred embodiment, the cores are preferably arranged in a width direction of the V-belt, and an interval between the leftmost core and the core adjacent to the leftmost core and an interval between the rightmost core and the core adjacent to the rightmost core are each preferably larger than an interval between the cores adjacent to each other in a center of the V-belt in the width direction thereof.

Thus, the lengths of the portions of the cores exposed through the right and left lateral surfaces can be reduced without significantly reducing the number of the cores included in the V-belt. As a result, power transmission efficiency can be sufficiently enhanced.

According to still another preferred embodiment, the cores adjacent to each other in the center of the V-belt in the width direction thereof are preferably in contact with each other.

Thus, the number of the cores in the center of the V-belt can be ensured, and therefore, power transmission efficiency can be enhanced.

According to **the present invention,** the cores are arranged in a width direction of the V-belt, and an angle formed by the leftmost core with respect to a longitudinal direction of the V-belt and an angle formed by the rightmost core with respect to the longitudinal direction of the V-belt are each preferably greater than an angle formed by the centermost core in the width direction of the V-belt with respect to the longitudinal direction of the V-belt.

Thus, when the V-belt is fabricated by spirally winding a wire around a rotating roller, the lengths of the portions of the cores exposed through the right and left lateral surfaces can be reduced without significantly reducing the number of the cores included in the V-belt. As a result, power transmission efficiency can be sufficiently enhanced.

According to still yet another preferred embodiment, rubber preferably exists above and below the cores in the intermediate rubber layer.

Thus, a sufficient frictional force can be ensured between the intermediate rubber layer and the driving pulley and between the intermediate rubber layer and the driven pulley, and therefore, power transmission efficiency can be enhanced.

According to another preferred embodiment, the lower rubber layer is preferably provided with a plurality of cogs that extend in a width direction of the V-belt.

The lower rubber layer is provided with the cogs in this manner, thus making it possible to limit deformation of the V-belt. The cogs themselves do not transmit power but can limit deformation of the V-belt. Consequently, contact between belt lateral surfaces and sheaves can be favorably maintained, and therefore, power transmission efficiency can be enhanced.

According to still another preferred embodiment, the upper rubber layer is preferably provided with a plurality of cogs that extend in the width direction of the V-belt.

Thus, deformation of the V-belt can be further limited.

According to yet another preferred embodiment, at least a portion of the upper rubber layer preferably includes a left lateral surface or a right lateral surface which is inclined toward a center as it extends upward.

The cogs have poor ability to transmit power, and therefore, the upper rubber layer, provided with the cogs, is further provided with the right or left lateral surface inclined as described above, thus making it possible to further reduce a power transmission loss while maintaining power transmission performance.

According to still yet another preferred embodiment, an interval is preferably provided between the cores adjacent to each other.

Thus, when the right and left lateral surfaces of the V-belt are cut off in the course of fabrication of the V-belt, the exposed portions of the cores are reduced in area. Therefore, portions of the right and left lateral surfaces of the V-belt which receive a very high pressure from the sheaves can be reduced. A pressure distribution of the V-belt can be further leveled out, and in addition, friction coefficients of the right and left lateral surfaces of the V-belt can be increased. As a result, power can be transmitted more favorably.

According to another preferred embodiment, the interval between the cores adjacent to each other is preferably equal to or greater than a diameter of the core.

Thus, the lengths of the portions of the cores exposed through the right and left lateral surfaces of the V-belt are shortened, and therefore, power can be transmitted more favorably.

A belt-type transmission according to a preferred embodiment includes the above-described V-belt, the belt-type transmission including: a driving pulley including a first sheave, and a second sheave that can be moved close to and away from the first sheave, the driving pulley being provided with a V-shaped groove located between the first and second sheaves; and a driven pulley including a first sheave, and a second sheave that can be moved close to and away from the first sheave, the driven pulley being provided with a V-shaped groove located between the first and second sheaves, wherein the V-belt is wound around the driving pulley so as to be sandwiched between the first and second sheaves of the driving pulley, and is wound around the driven pulley so as to be sandwiched between the first and second sheaves of the driven pulley.

Thus, the belt-type transmission having high power transmission efficiency can be obtained.

A straddle-type vehicle according to a preferred embodiment includes the above-described belt-type transmission.

Thus, the straddle-type vehicle including the belt-type transmission having high power transmission efficiency can be obtained.

### ADVANTAGEOUS EFFECTS OF INVENTION

Various embodiments of the present invention provide a V-belt capable of enhancing power transmission efficiency to a degree not heretofore attained, and a belt-type transmission and a straddle-type vehicle each including such a V-belt.

### BRIEF DESCRIPTION OF DRAWINGS

FIG. 1 is a side view of a motorcycle.
FIG. 2 is a cross-sectional view taken along the line II-II of FIG. 1.
FIG. 3 is a perspective view of a V-belt according to a first preferred embodiment.
FIG. 4 is a cross-sectional view of the V-belt according to the first embodiment.
FIGS. 5A and 5B are diagrams for describing a relationship between an angle between right and left lateral surfaces of the V-belt, and a radius of the wound V-belt.
FIG. 6A is a diagram illustrating a tension exerted on a minute element of a driving side wound portion of the V-belt.
FIG. 6B is an enlarged diagram of FIG. 6A.
FIG. 7 is a diagram for describing deformation of the V-belt.
FIG. 8A is a diagram illustrating a cross-sectional shape of a V-belt and a distribution of pressure received by the V-belt, with cores exposed at right and left lateral surfaces of the V-belt.
FIG. 8B is a diagram illustrating a cross-sectional shape of a V-belt and a distribution of pressure received by the V-belt, with cores unexposed at right and left lateral surfaces of the V-belt.
FIG. 9 is a perspective view of a V-belt according to a second preferred embodiment.
FIG. 10 is a cross-sectional view of the V-belt according to the second embodiment.
FIG. 11 is a perspective view of a V-belt according to a third preferred embodiment.
FIG. 12 is a diagram illustrating how a wire is wound around a roller in the course of fabrication of the V-belt according to the third embodiment, **that discloses the combination of the features of claim 1.**
FIG. 13 is a plan view illustrating locations of cores of the V-belt according to the third embodiment.
FIG. 14 is a plan view illustrating locations of cores of another V-belt according to the third embodiment.
FIG. 15 is a perspective view of a V-belt according to a fourth preferred embodiment.

### DESCRIPTION OF EMBODIMENTS

### First Embodiment

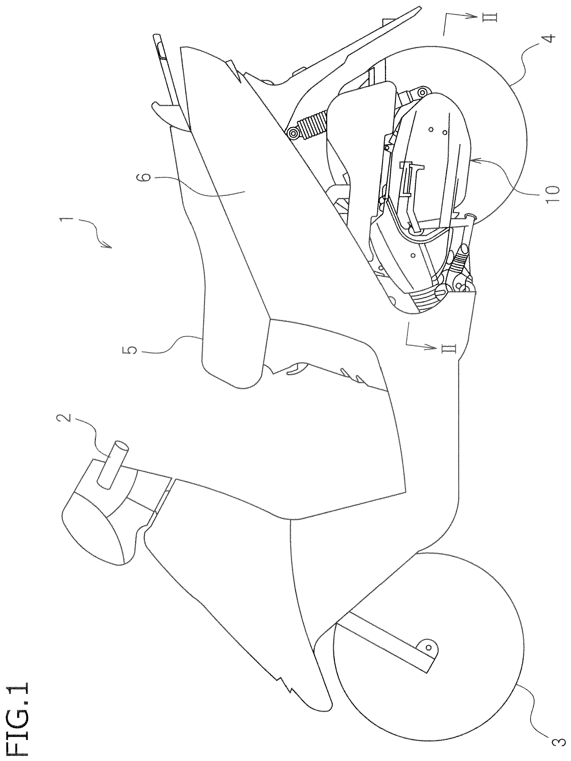

As illustrated in FIG. 1, a straddle-type vehicle according to the present embodiment is a scooter-type motorcycle 1. It is to be noted that the straddle-type vehicle according to the present teaching is not limited to the scooter-type motorcycle 1, but may be any other type of motorcycle. The straddle-type vehicle may be a "street", "off-road" or "moped-type" motorcycle, for example. The term "straddle-type vehicle" refers to any vehicle that a rider straddles when getting on the vehicle, and is therefore not limited to a motorcycle. The straddle-type vehicle may be a snowmobile or an ATV (All Terrain Vehicle), for example. Application of a V-belt and a belt-type transmission according to the present teaching is not limited to a straddle-type vehicle, but the present teaching may be applied to any other vehicle such as an automobile or any apparatus other than a vehicle.

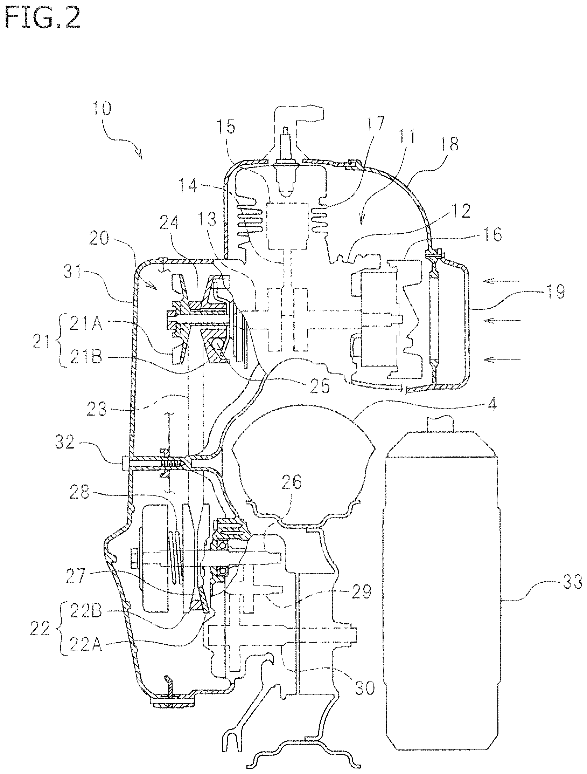

The motorcycle 1 preferably includes: a not-illustrated body frame; a handlebar 2; a front wheel 3; a rear wheel 4; an engine unit 10; a seat 5; and a body cover 6. The engine unit 10 is supported by the body frame in a swingable manner. The engine unit 10 is connected to the rear wheel 4. The engine unit 10 preferably includes an engine 11 (see FIG. 2), and drives the rear wheel 4 with a driving force generated by the engine 11.

As illustrated in FIG. 2, the engine unit 10 preferably includes the engine 11 and a belt-type continuously variable transmission 20 (hereinafter referred to as a "CVT 20"). The driving force generated by the engine 11 is transmitted to the rear wheel 4 via the CVT 20.

The engine 11 preferably includes: a crankcase 12; a crankshaft 13 disposed inside the crankcase 12; and a piston 15 connected to the crankshaft 13 via a connecting rod 14. A cylinder 17 is connected to the crankcase 12. A fan 16 is provided at a right end portion of the crankshaft 13. The crankcase 12, the cylinder 17 and the fan 16 are disposed inside a cover 18. The cover 18 is provided with an intake port 19. The intake port 19 is disposed rightward of the fan 16 and faces the fan 16. The fan 16 rotates upon rotation of the crankshaft 13. The fan 16 causes air to be sucked into the cover 18 through the intake port 19, thus supplying air to the crankcase 12 and the cylinder 17.

The CVT 20 is an example of a belt-type transmission. The CVT 20 preferably includes: a driving pulley 21; a driven pulley 22; and a V-belt 23.

The driving pulley 21 is attached to a left end portion of the crankshaft 13. The driving pulley 21 preferably includes: a first sheave 21A; and a second sheave 21B that can be moved close to and away from the first sheave 21A. The first sheave 21A rotates together with the crankshaft 13 but is unmovable in an axial direction of the crankshaft 13. The second sheave 21B rotates together with the crankshaft 13 and is movable in the axial direction of the crankshaft 13. Although the first sheave 21A is unmovable in the axial direction of the crankshaft 13 in the present embodiment, both of the first and second sheaves 21A and 21B may be movable in the axial direction of the crankshaft 13. A V-shaped groove (hereinafter referred to as a "V groove") 24 is provided between the first and second sheaves 21A and 21B.

The CVT 20 according to the present embodiment is a centrifugal belt-type continuously variable transmission. A centrifugal weight 25 is disposed rightward of the second sheave 21B. Upon an increase in rotational speed of the crankshaft 13, the centrifugal weight 25 moves outward in a radial direction of the crankshaft 13, thus pressing the second sheave 21B toward the first sheave 21A (i.e., leftward in FIG. 2). It is to be noted that the belt-type transmission according to the present teaching is not limited to a centrifugal belt-type transmission, but may be a hydraulic or electric belt-type transmission, for example.

The driven pulley 22 is attached to a drive shaft 26. The driven pulley 22 preferably includes: a first sheave 22A; and a second sheave 22B that can be moved close to and away from the first sheave 22A. The first sheave 22A rotates together with the drive shaft 26 but is unmovable in an axial direction of the drive shaft 26. The second sheave 22B rotates together with the drive shaft 26 and is movable in the axial direction of the drive shaft 26. A V groove 27 is provided between the first and second sheaves 22A and 22B. The second sheave 22B is pressed toward the first sheave 22A (i.e., rightward in FIG. 2) by a spring 28. Note that a means for pressing the second sheave 22B toward the first sheave 22A is not limited to the spring 28.

The V-belt 23 is an endless belt and wound around the driving and driven pulleys 21 and 22. Specifically, the V-belt 23 is wound around the driving pulley 21 so as to be sandwiched between the first and second sheaves 21A and 21B, and wound around the driven pulley 22 so as to be sandwiched between the first and second sheaves 22A and 22B. The V-belt 23 goes into the V groove 24 of the driving pulley 21 and the V groove 27 of the driven pulley 22. Note that a structure of the V-belt 23 will be described later.

A transmission cover 31 is disposed leftward of the CVT 20. The transmission cover 31 is attached to the crankcase 12 with a bolt 32.

An intermediate shaft 29 is disposed rearward of the drive shaft 26. An output shaft 30 is disposed rearward of the intermediate shaft 29. The drive shaft 26 is provided with a gear (not illustrated), and the intermediate shaft 29 is provided with a gear (not illustrated) that intermeshes with the gear of the drive shaft 26. The drive shaft 26 and the intermediate shaft 29 are connected to each other via these gears, so that a torque of the drive shaft 26 is transmitted to the intermediate shaft 29. The intermediate shaft 29 is provided with an additional gear (not illustrated), and the output shaft 30 is provided with a gear (not illustrated) that intermeshes with the additional gear of the intermediate shaft 29. The intermediate shaft 29 and the output shaft 30 are connected to each other via these gears, so that a torque of the intermediate shaft 29 is transmitted to the output shaft 30. The output shaft 30 is connected to the rear wheel 4. A rotation of the drive shaft 26 is reduced in speed through the intermediate shaft 29 and the output shaft 30 and then transmitted to the rear wheel 4. Note that the reference sign "33" in FIG. 2 denotes a muffler.

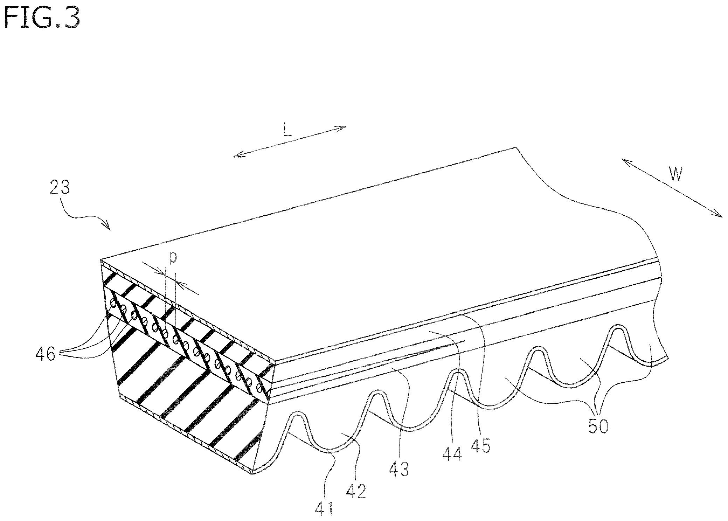

Next, the structure of the V-belt 23 will be described. As illustrated in FIG. 3, the V-belt 23 is provided by stacking a lower canvas 41, a lower rubber layer 42, an intermediate rubber layer 43, an upper rubber layer 44, and an upper canvas 45 in this order. As used herein, the terms "upper" and "lower" merely refer to upper and lower positions in FIG. 3, and are thus merely used for the sake of convenience of description. The V-belt 23 is not necessarily used with the upper rubber layer 44 located above the lower rubber layer 42. When the V-belt 23 is wound around the driving and driven pulleys 21 and 22, the upper rubber layer 44 is located radially outward of the lower rubber layer 42. Hence, the upper rubber layer and the lower rubber layer may also be referred to as an "outer rubber layer" and an "inner rubber layer", respectively. The lower rubber layer 42, the intermediate rubber layer 43 and the upper rubber layer 44 each consist mainly of rubber. The lower rubber layer 42, the intermediate rubber layer 43 and the upper rubber layer 44 may each consist only of rubber, or may each include rubber containing short fiber such as carbon short fiber or aramid short fiber. Note that a substance contained in rubber of the lower rubber layer 42, the intermediate rubber layer 43 and the upper rubber layer 44 is not limited to any particular substance. In the following description, unless otherwise specified, the term "rubber" refers to a material consisting mainly of rubber, and also includes rubber containing short fiber, for example.

The reference signs "L" and "W" in FIG. 3 represent a "longitudinal direction" and a "width direction" of the V-belt 23, respectively. Cores 46 that extend substantially in the longitudinal direction of the V-belt 23 are embedded in the intermediate rubber layer 43. In the V-belt 23 according to the present embodiment, an interval is provided between the cores 46 adjacent to each other, so that the cores 46 are located away from each other. The interval between the cores 46 is not limited to any particular interval but is equal to a diameter of each core 46 in the present embodiment. Alternatively, the interval between the cores 46 may be larger or smaller than the diameter of each core 46. A pitch p between the cores 46 (i.e., a distance between centers of the cores 46) is set to be twice as large as the diameter of each core 46.

The lower rubber layer 42 is provided with a plurality of cogs 50 that extend in the width direction of the V-belt 23. The cogs 50 are arranged in the longitudinal direction of the V-belt 23. The cogs 50 serve to prevent deformation which is called "dishing" from occurring in the V-belt 23. However, the cogs 50 do not make a significant contribution to power transmission. In the present embodiment, power transmission is mainly carried out via the upper rubber layer 44, the intermediate rubber layer 43, the cores 46, and a portion of the lower rubber layer 42 other than the cogs 50. In particular, the cores 46 play an important role for power transmission. The upper rubber layer 44, the intermediate rubber layer 43 and the lower rubber layer 42 come into contact with the first and second sheaves 21A and 21B of the driving pulley 21, and also come into contact with the first and second sheaves 22A and 22B of the driven pulley 22. Friction at contact surfaces of the upper rubber layer 44, the intermediate rubber layer 43 and the lower rubber layer 42 allows power to be transmitted from the driving pulley 21 to the upper rubber layer 44, the intermediate rubber layer 43 and the lower rubber layer 42. This power is transmitted through the cores 46 and is then transmitted to the driven pulley 22 due to friction at the contact surfaces of the upper rubber layer 44, the intermediate rubber layer 43 and the lower rubber layer 42.

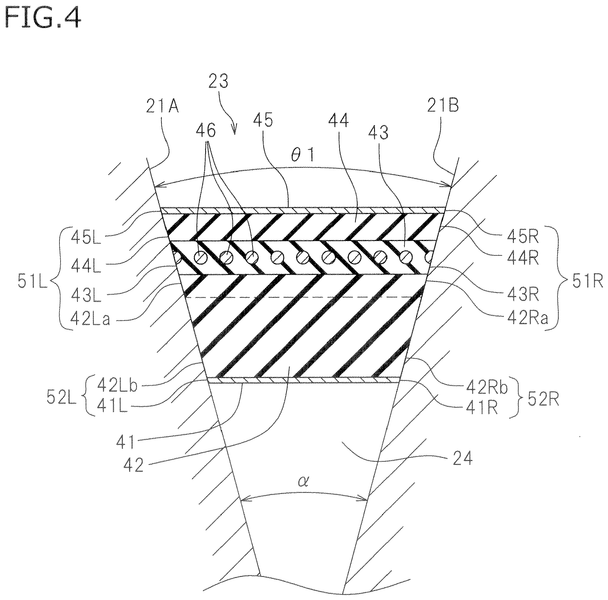

FIG. 4 is a diagram illustrating a cross section of the V-belt 23 sandwiched between the first and second sheaves 21A and 21B of the driving pulley 21. Although not illustrated, also in the driven pulley 22, the V-belt 23 is similarly sandwiched between the first and second sheaves 22A and 22B.

As illustrated in FIG. 4, the V-belt 23 preferably includes: a first left lateral surface 51L; and a second left lateral surface 52L whose length varies due to the existence of the cogs 50. The first left lateral surface 51L is defined by: a left lateral surface 45L of the upper canvas 45; a left lateral surface 44L of the upper rubber layer 44; a left lateral surface 43L of the intermediate rubber layer 43; and a left lateral surface 42La of a portion of the lower rubber layer 42. As illustrated in FIG. 4, when the core 46 is exposed leftward, the exposed portion of the core 46 defines a portion of the first left lateral surface 51L. The second left lateral surface 52L is defined by: a left lateral surface 42Lb of the remaining portion of the lower rubber layer 42; and a left lateral surface 41L of the lower canvas 41. In the present embodiment, left lateral surfaces of the cogs 50 (see FIG. 3) define the left lateral surface 42Lb. A lower end position of the first left lateral surface 51L substantially coincides with an upper end position of each cog 50. In other words, the upper end position of each cog 50 substantially coincides with an upper end position of the left lateral surface 42Lb. The second left lateral surface 52L is located below the first left lateral surface 51L.

The V-belt 23 has a symmetrical cross-sectional shape. The V-belt 23 preferably includes: a first right lateral surface 51R; and a second right lateral surface 52R whose length varies due to the existence of the cogs 50. The first right lateral surface 51R is defined by: a right lateral surface 45R of the upper canvas 45; a right lateral surface 44R of the upper rubber layer 44; a right lateral surface 43R of the intermediate rubber layer 43; and a right lateral surface 42Ra of a portion of the lower rubber layer 42. When the core 46 is exposed rightward, the exposed portion of the core 46 defines a portion of the first right lateral surface 51R. The second right lateral surface 52R is defined by: a right lateral surface 42Rb of the remaining portion of the lower rubber layer 42; and a right lateral surface 41R of the lower canvas 41. A lower end position of the first right lateral surface 51R substantially coincides with the upper end position of each cog 50. The second right lateral surface 52R is located below the first right lateral surface 51R.

As already mentioned above, the cores 46 are embedded in the intermediate rubber layer 43. In the intermediate rubber layer 43, rubber exists above and below the cores 46. A vertical thickness of the left lateral surface 42La of the lower rubber layer 42 is not limited to any particular thickness, but is set to be smaller than a vertical thickness of the left lateral surface 43L of the intermediate rubber layer 43 in the present embodiment. Alternatively, the vertical thickness of the left lateral surface 42La of the lower rubber layer 42 may be equal to the vertical thickness of the left lateral surface 43L of the intermediate rubber layer 43, or may be larger than the vertical thickness of the left lateral surface 43L of the intermediate rubber layer 43. Note that an overall vertical thickness of the left lateral surface of the lower rubber layer 42, i.e., an overall vertical thickness of the left lateral surface 42La and the left lateral surface 42Lb, is larger than the vertical thickness of the left lateral surface 43L of the intermediate rubber layer 43.

Portions of the cores 46 are exposed through the first left lateral surface 51L and the first right lateral surface 51R of the V-belt 23 (see also FIG. 3). More specifically, portions of the cores 46 are exposed through the left lateral surface 43L and the right lateral surface 43R of the intermediate rubber layer 43. It is to be noted that a length of a portion of the core 46 exposed through the first left lateral surface 51L and a length of a portion of the core 46 exposed through the first right lateral surface 51R are each equal to or less than a half of a length of the core 46. The length of the portion of the core 46 exposed through the first left lateral surface 51L and the length of the portion of the core 46 exposed through the first right lateral surface 51R are each equal to or less than a half of a length of the intermediate rubber layer 43. As used herein, the term "length" refers to a length measured along the longitudinal direction of the V-belt 23. Since the V-belt 23 is provided as an endless belt, the length of each core 46 is equal to a circumferential length of each core 46, and the length of the intermediate rubber layer 43 is equal to a circumferential length of the intermediate rubber layer 43. Note that the term "length of the core 46" refers to a length corresponding to a single turn of the cores 46 when a plurality of the cores 46 are connected to each other inside the intermediate rubber layer 43.

In the following description, an angle between the first left lateral surface 51L and the first right lateral surface 51R is represented by θ1. An angle between a lateral surface of the first sheave 21A and a lateral surface of the second sheave 21B is represented by a. This angle is an angle of the V groove 24. Hereinafter, this angle will be referred to as a "groove angle α".

In the present embodiment, the angle θ1 is equal to the groove angle a. Specifically, when the V-belt 23 is under no tension, the angle θ1 between the first left lateral surface 51L and the first right lateral surface 51R is equal to the angle α of the groove 24 formed between the first and second sheaves 21A and 21B. Therefore, the first left lateral surface 51L and the first sheave 21A are brought into contact with each other in a favorable manner, and the first right lateral surface 51R and the second sheave 21B are brought into contact with each other in a favorable manner. It is to be noted that the angle θ1 and the groove angle α do not have to be strictly equal to each other. The angle θ1 and the groove angle α may be substantially equal to each other. The angle θ1 may differ from the groove angle α to the extent that power transmission efficiency of the V-belt 23 does not degrade significantly. Even if the angle θ1 and the groove angle α are not substantially equal to each other when the V-belt 23 is under no tension, application of a tension to the V-belt 23 and sandwiching of the V-belt 23 between the first and second sheaves 21A and 21B may cause deformation of the upper rubber layer 44, for example, which may allow the first left lateral surface 51L and the first sheave 21A to sufficiently come into contact with each other and allow the first right lateral surface 51R and the second sheave 21B to sufficiently come into contact with each other. In such a case, the angle θ1 and the groove angle α may be substantially different from each other.

A mechanism for transmitting power through the V-belt 23 is generally as follows. Power from the driving pulley 21 is transmitted to a portion of the V-belt 23 which is wound around the driving pulley 21 (hereinafter referred to as a "driving side wound portion") due to a frictional force between the driving pulley 21 and the V-belt 23. The force transmitted to the driving side wound portion of the V-belt 23 is transmitted to the cores 46 due to an adhesion force between rubber of the driving side wound portion and the cores 46. The force transmitted to the cores 46 becomes a tension on the cores 46 and is transmitted to a portion of the V-belt 23 which is wound around the driven pulley 22 (hereinafter referred to as a "driven side wound portion"). The force transmitted to the driven side wound portion of the V-belt 23 is transmitted to the driven pulley 22 due to a frictional force between the V-belt 23 and the driven pulley 22. Thus, the V-belt 23 transmits power from the driving pulley 21 to the driven pulley 22.

The frictional force between the V-belt 23 and the driving pulley 21, and the frictional force between the V-belt 23 and the driven pulley 22 are mainly produced at right and left lateral surfaces of rubber of the V-belt 23. In order to enhance power transmission efficiency of the V-belt 23, it is desirable to increase these frictional forces. However, power transmission efficiency cannot necessarily be improved by merely increasing a contact area between the V-belt 23 and the driving pulley 21 and a contact area between the V-belt 23 and the driven pulley 22. The reason for this will be described below.

During operation of the CVT 20, a portion of the V-belt 23 goes into the V groove 24 of the driving pulley 21, and the other portion of the V-belt 23 goes out of the V groove 24. In this case, the frictional force between the V-belt 23 and the driving pulley 21 is produced not only in a circumferential direction of the driving pulley 21 but also in a radial direction thereof. However, the radial frictional force does not contribute to power transmission, thus causing a power transmission loss. Similarly, a power transmission loss also occurs when the V-belt 23 goes into the V groove 27 of the driven pulley 22 and when the V-belt 23 goes out of the V groove 27. Therefore, when the contact area between the V-belt 23 and the driving pulley 21 and the contact area between the V-belt 23 and the driven pulley 22 are merely increased, the radial frictional force is increased to a greater degree than the circumferential frictional force, which may result in an increase in power transmission loss.

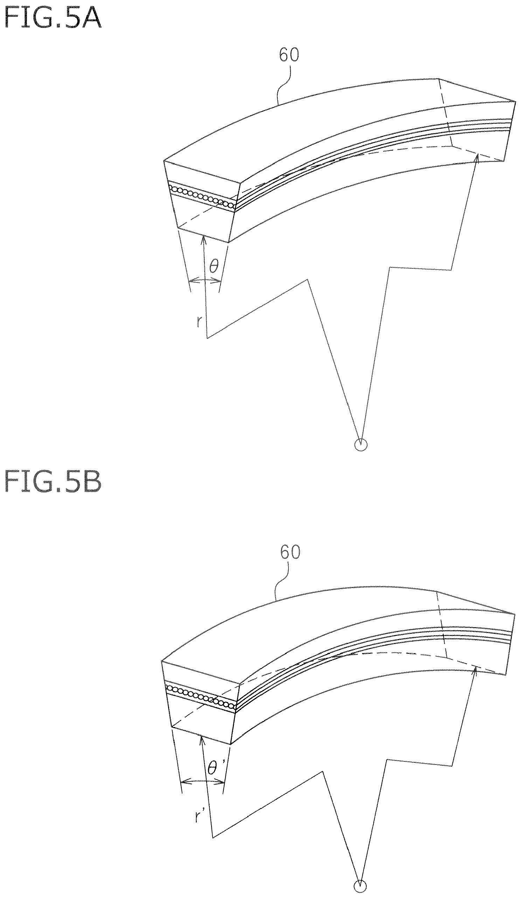

The cross-sectional shape of the V-belt 23 is changed by winding the V-belt 23 around the pulleys 21 and 22. Hence, a portion of the V-belt 23 which is located inside the V groove 24 of the driving pulley 21 (i.e., the driving side wound portion) and a portion of the V-belt 23 which is located inside the V groove 27 of the driven pulley 22 (i.e., the driven side wound portion) are deformed. As schematically illustrated in FIGS. 5A and 5B, the smaller the V-belt winding radius, the smaller the angle θ between right and left lateral surfaces of a V-belt 60. When r' < r, θ' < θ. Since the driving side wound portion and the driven side wound portion of the V-belt 23 are wound around the driving and driven pulleys 21 and 22, respectively, a lower portion of the V-belt 23 is strongly pressed against the sheaves 21A and 21B when the V-belt 23 goes into the V groove 24 of the driving pulley 21, and the lower portion of the V-belt 23 is strongly pressed against the sheaves 22A and 22B when the V-belt 23 goes into the V groove 27 of the driven pulley 22.

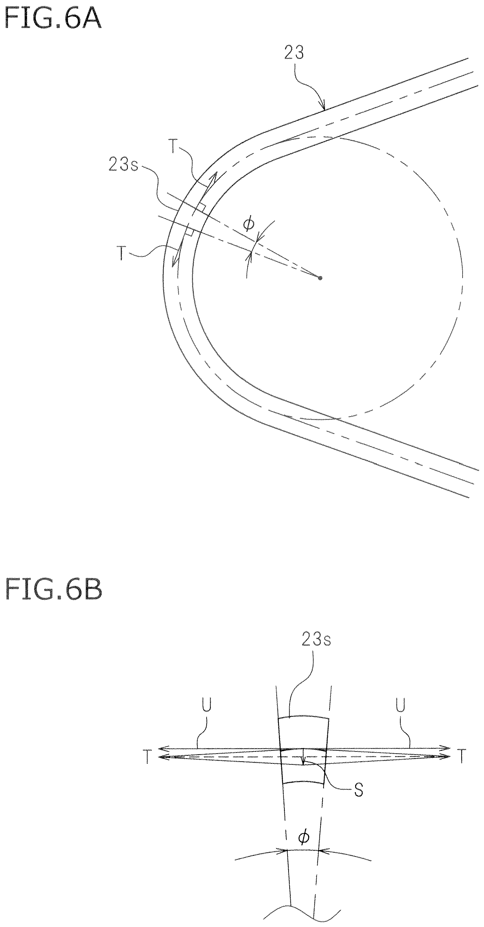

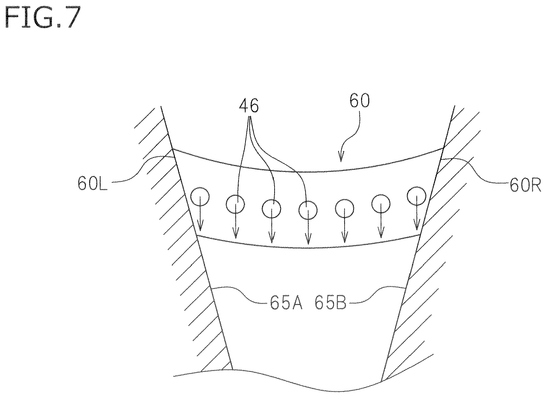

FIG. 6A is a diagram illustrating a tension T exerted on a minute element 23s of the driving side wound portion of the V-belt 23 (although not illustrated, the same goes for the driven side wound portion). FIG. 6B is an enlarged view of the minute element 23s. In these diagrams, φ represents an angle formed between ends of the minute element 23s. As illustrated in FIG. 6B, the tension T exerted on the minute element 23s can be divided into a circumferential component U and a radial component S. The tension of the V-belt 23 is transmitted mainly through the cores 46. Therefore, as schematically illustrated in FIG. 7, not only a circumferential force but also a radially inward force is exerted on the cores 46 in driving side and driven side wound portions of the V-belt 60. A left lateral surface 60L and a right lateral surface 60R of the V-belt 60 are brought into contact with sheaves 65A and 65B, respectively. Hence, a cross-sectional shape of the V-belt 60 changes into a downwardly convex shape. As a result, stress is applied to a lower portion of the V-belt 60 so that the lower portion of the V-belt 60 is expanded in a width direction thereof, and the lower portion of the V-belt 60 is strongly pressed against the sheaves 65A and 65B. Thus, the driving side wound portion and the driven side wound portion of the V-belt 23 are deformed into convex shapes that extend inward in the radial directions of the driving pulley 21 and the driven pulley 22, respectively, and therefore, the lower portion of the V-belt 23 is strongly pressed against the sheaves 21A and 21B of the driving pulley 21, and is also strongly pressed against the sheaves 22A and 22B of the driven pulley 22.

Main portions of the V-belt 23 which produce a tension are the cores 46. Therefore, in order to efficiently transmit power from the driving pulley 21 to the driven pulley 22, power transmitted from the driving pulley 21 to a lateral surface of the driving side wound portion of the V-belt 23 is preferably transmitted to the cores 46 with reliability, and then power is preferably transmitted from the cores 46 to a lateral surface of the driven side wound portion of the V-belt 23 with reliability. Power to be transmitted from the driving pulley 21 is preferably transmitted to portions of the V-belt 23 located adjacent to the cores 46. Power to be transmitted to the driven pulley 22 is preferably transmitted from the portions of the V-belt 23 located adjacent to the cores 46. Hence, it is desirable to ensure a frictional force of the adjacent portions of the cores 46 for the driving pulley 21 and the driven pulley 22. However, the lower portion of the V-belt 23 is located far away from the cores 46. Therefore, when the lower portion of the V-belt 23 is strongly pressed against the sheaves 21A and 21B of the driving pulley 21 and the sheaves 22A and 22B of the driven pulley 22, power transmission performance is not enhanced significantly, while a power transmission loss is increased. Consequently, short fiber protrudes from a surface of the lower portion of the V-belt 23, thus substantially reducing a friction coefficient thereof.

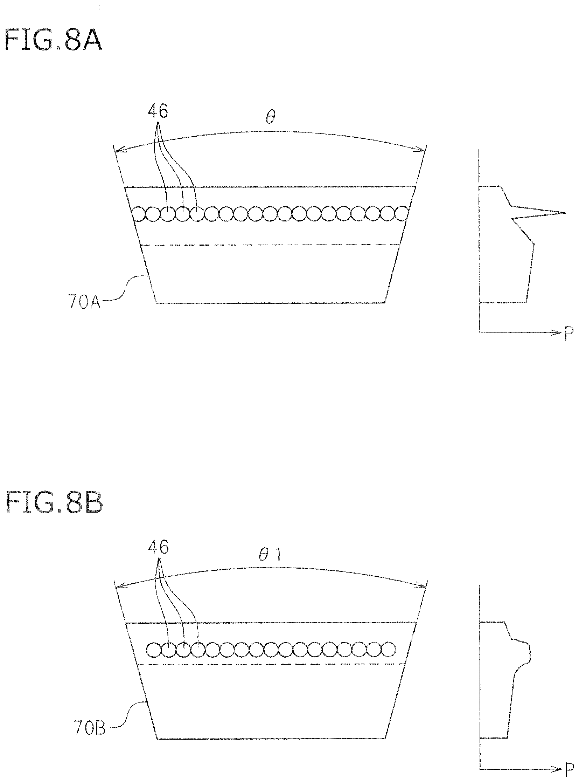

FIGS. 8A and 8B are diagrams each illustrating a cross-sectional shape of a V-belt and a distribution of a pressure P received by a lateral surface of the V-belt from a sheave.

As can be seen from FIG. 8A, the pressure applied to adjacent portions of the cores 46 is high. The cores 46 are provided by twining thin threads several times and greater in rigidity than rubber, and therefore, the core portions receive a large portion of lateral pressure.

When the core 46 is exposed at a right or left lateral surface of the V-belt as illustrated in FIG. 8A, sheaves of driving and driven pulleys come into contact with the core 46. The core 46 has a friction coefficient lower than that of rubber. Hence, the pressure received by the core 46 is high, and the lateral pressure applied to rubber is reduced accordingly, which limits the enhancement of power transmission efficiency.

On the other hand, when the core 46 is not exposed at the right or left lateral surface of the V-belt as illustrated in FIG. 8B, a peak value of the pressure P received by the lateral surface of the V-belt from the sheave in this case is lower than a peak value of the pressure P received by the exposed portion of the core 46 which is illustrated in FIG. 8A. As a result, the lateral pressure applied to rubber located above and below the cores 46 is increased, and the high lateral pressure can be received by the portion having a high friction coefficient, thus making it possible to enhance power transmission efficiency. In the V-belt 23 according to the present embodiment, the length of the portion of the core 46 exposed through the first left lateral surface 51L is equal to or less than a half of the length of the core 46, and the length of the portion of the core 46 exposed through the first right lateral surface 51R is equal to or less than a half of the length of the core 46. In the V-belt 23 according to the present embodiment, the lengths of the exposed portions of the cores 46 are short. Therefore, portions of the left lateral surfaces 51L and 52L and the right lateral surfaces 51R and 52R of the V-belt 23 to which a very high pressure is applied can be reduced. Hence, the pressure distribution of the V-belt 23 can be further leveled out. Since the portion having a friction coefficient lower than that of rubber is reduced, substantial friction coefficients of the left lateral surfaces 51L and 52L and the right lateral surfaces 51R and 52R are increased, thus enabling favorable power transmission. When the substantial friction coefficients are increased, a radial frictional force is also increased if no measures are taken, but the radial frictional force can be reduced by increasing a sheave angle in accordance with the increases in the friction coefficients. Furthermore, the pressure (lateral pressure) received by the left lateral surfaces 51L and 52L and the right lateral surfaces 51R and 52R can be reduced, and deformation of the V-belt 23 can be limited, thus enabling more favorable power transmission.

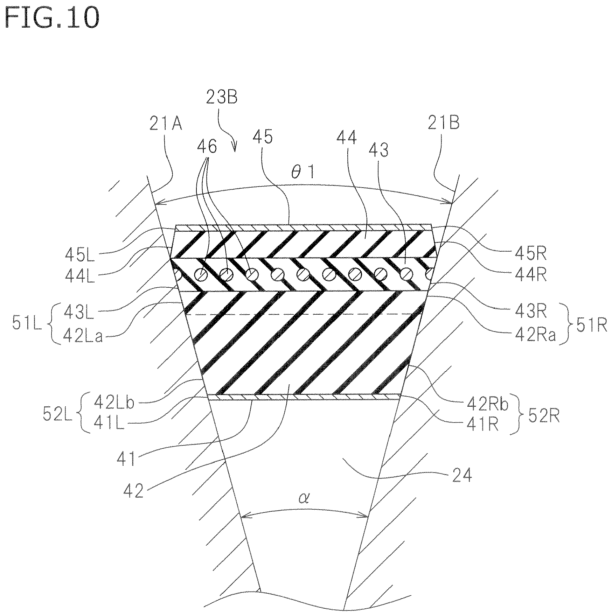

As used herein, the term "radial frictional force" refers to resistance produced when the belt moves in a driving force transmitting state (i.e., a rotating state) from a radially outward direction of the sheaves toward a radially inward direction thereof, i.e., toward a position at which the belt can transmit a driving force by being sandwiched between the sheaves on both sides, or when the belt moves from a position, at which the belt transmits power, toward the radially outward direction. This resistance corresponds to a loss of horsepower (transmission loss) which does not contribute to driving force transmission. The sheave angle is represented by α in FIGS. 4 and 10. Assuming that a force (thrust) exerted in a direction in which a distance between a pair of the sheaves is reduced remains the same, an increase in the sheave angle can reduce a vertical component of force received by the belt from a sheave surface, thus making it possible to reduce the radial frictional force. As a result, power can be transmitted without preventing a smooth radial movement of the belt. At the same time, deformation, which is called "dishing", is reduced, thus increasing power to be transmitted and reducing a loss caused by the deformation.

As described above, the V-belt 23 according to the present embodiment preferably includes: the first left lateral surface 51L including the left lateral surface 43L of the intermediate rubber layer 43; the second left lateral surface 52L located below the first left lateral surface 51L; the first right lateral surface 51R including the right lateral surface 43R of the intermediate rubber layer 43; and the second right lateral surface 52R located below the first right lateral surface 51R. The length of the portion of the core 46 exposed through the first left lateral surface 51L and the length of the portion of the core 46 exposed through the first right lateral surface 51R are each equal to or less than a half of the length of the core 46. In the V-belt 23 according to the present embodiment, the first left lateral surface 51L and the first right lateral surface 51R are easily brought into contact with the sheaves 21A and 21B of the driving pulley 21 in a favorable manner, and also easily brought into contact with the sheaves 22A and 22B of the driven pulley 22 in a favorable manner, thus making it possible to transmit a frictional force between the driving pulley 21 and the V-belt 23 and between the driven pulley 22 and the V-belt 23 in a favorable manner. In addition, even when the V-belt 23 is deformed inside the V grooves 24 and 27 of the driving and driven pulleys 21 and 22 and the lower portion of the V-belt 23 is increased in width, the lower portion of the V-belt 23 is prevented from being strongly pressed against the driving and driven pulleys 21 and 22. Portions of the left lateral surfaces 51L and 52L and the right lateral surfaces 51R and 52R of the V-belt 23 to which a very high pressure is applied can be reduced, and thus the pressure distribution of the V-belt 23 can be further leveled out. The substantial friction coefficients of the left lateral surfaces 51L and 52L and the right lateral surfaces 51R and 52R can be increased. The pressure (lateral pressure) received by the left lateral surfaces 51L and 52L and the right lateral surfaces 51R and 52R can be reduced, and thus deformation of the V-belt 23 can be limited. Accordingly, the V-belt 23 according to the present embodiment can enhance power transmission efficiency to a degree not heretofore attained.

A length of a portion of the core 46 continuously exposed through the first left lateral surface 51L and a length of a portion of the core 46 continuously exposed through the first right lateral surface 51R are each equal to or less than a half of the length of the core 46. As a result, power transmission efficiency can be further enhanced.

Portions of the first left lateral surface 51L and the first right lateral surface 51R of the V-belt 23 other than portions thereof at which the cores 46 are exposed are defined only by surfaces consisting mainly of rubber. As a result, the V-belt 23 easily transmits a frictional force between the driving pulley 21 and the V-belt 23 and between the driven pulley 22 and the V-belt 23 in a favorable manner, thus making it possible to enhance power transmission efficiency.

In the intermediate rubber layer 43 of the V-belt 23, rubber exists above and below the cores 46. Therefore, a sufficient frictional force can be ensured between the intermediate rubber layer 43 and the sheaves 21A and 21B of the driving pulley 21, and a sufficient frictional force can be ensured between the intermediate rubber layer 43 and the sheaves 22A and 22B of the driven pulley 22. As a result, power transmission efficiency can be enhanced.

In the V-belt 23, the lower rubber layer 42 is provided with a plurality of the cogs 50 that extend in the width direction of the V-belt 23. The second left lateral surface 52L preferably includes the left lateral surface 42Lb of the cog 50, and the second right lateral surface 52R preferably includes the right lateral surface 42Rb of the cog 50. The lower rubber layer 42 of the V-belt 23 is provided with a plurality of the cogs 50 in this manner, thus allowing the V-belt 23 to be wound easily and making it difficult to change the cross-sectional shape of the V-belt 23 when it is wound. Therefore, deformation of the cross-sectional shape is limited in the driving side and driven side wound portions of the V-belt 23. Hence, power transmission efficiency of the V-belt 23 can be maintained at a high level. The cogs 50 serve to limit deformation of the V-belt 23, but have poor ability to transmit power. However, the left lateral surface 42Lb of the cog 50 is included in the second left lateral surface 52L, and the right lateral surface 42Rb of the cog 50 is included in the second right lateral surface 52R, thus making it possible to reduce degradation in power transmission performance which is associated with providing of the cogs 50. As a result, the above-mentioned effect which reduces a power transmission loss while maintaining power transmission performance can be remarkably achieved.

In the V-belt 23 according to the present embodiment, the lower end positions of the first left lateral surface 51L and the first right lateral surface 51R substantially coincide with the upper end positions of the cogs 50. Thus, deformation of the V-belt 23 can be suitably limited.

According to the present embodiment, when the V-belt 23 is under no tension, the angle θ between the first left lateral surface 51L and the first right lateral surface 51R is substantially equal to the angle of the groove 24 formed between the first and second sheaves 21A and 21B of the driving pulley 21. Therefore, the first left lateral surface 51L of the V-belt 23 and the first sheave 21A are brought into contact with each other in a favorable manner, and the first right lateral surface 51R and the second sheave 21B are brought into contact with each other in a favorable manner. Accordingly, power from the driving pulley 21 can be sufficiently received by the first left lateral surface 51L and the first right lateral surface 51R. In other words, power can be sufficiently transmitted from the driving pulley 21 to the V-belt 23. The angle θ1 is also substantially equal to the angle of the groove 27 formed between the first and second sheaves 22A and 22B of the driven pulley 22. Therefore, power can be sufficiently transmitted from the V-belt 23 to the driven pulley 22. Consequently, power transmission performance of the V-belt 23 can be sufficiently ensured.

Note that in the present embodiment, the left lateral surface 45L of the upper canvas 45 defines a portion of the first left lateral surface 51L, and the right lateral surface 45R of the upper canvas 45 defines a portion of the first right lateral surface 51R. However, the left lateral surface 45L of the upper canvas 45 does not have to be included in the first left lateral surface 51L, and the right lateral surface 45R of the upper canvas 45 does not have to be included in the first right lateral surface 51R. Similarly, the left lateral surface 41L of the lower canvas 41 does not have to be included in the second left lateral surface 52L, and the right lateral surface 41R of the lower canvas 41 does not have to be included in the second right lateral surface 52R.

### Second Embodiment

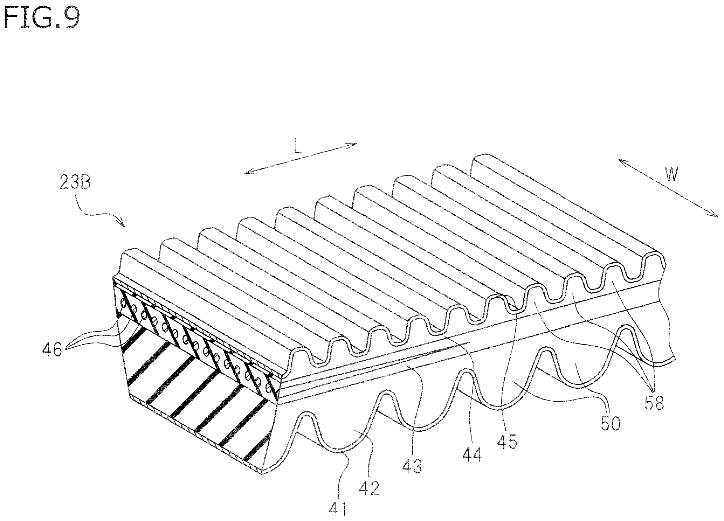

The above-described embodiment is provided by way of example only, and therefore, the V-belt according to the present teaching can be provided in various other embodiments. As illustrated in FIG. 9, in a V-belt 23B according to a second preferred embodiment, the lower rubber layer 42 is provided with the cogs 50, and in addition, the upper rubber layer 44 is also provided with a plurality of cogs 58.

The V-belt 23B is provided by stacking the lower canvas 41, the lower rubber layer 42, the intermediate rubber layer 43, the upper rubber layer 44, and the upper canvas 45 in this order. The cores 46 are embedded in the intermediate rubber layer 43. The lower rubber layer 42 is provided with a plurality of the cogs 50 that extend in a width direction of the V-belt 23B, and the cogs 50 are arranged in a longitudinal direction of the V-belt 23B. The upper rubber layer 44 is provided with a plurality of the cogs 58 that extend in the width direction of the V-belt 23B, and the cogs 58 are arranged in the longitudinal direction of the V-belt 23B. The cogs 58 are smaller than the cogs 50. A pitch between the cogs 58 is smaller than a pitch between the cogs 50. A longitudinal width of each cog 58 (i.e., a width thereof in the longitudinal direction L of the V-belt 23B) is shorter than a longitudinal width of each cog 50. A vertical thickness of each cog 58 is smaller than a vertical thickness of each cog 50. It is to be noted that shapes and dimensions of the cogs 58 and the cogs 50 are not limited to any particular shapes and dimensions.

As illustrated in FIG. 10, also in the present embodiment, the V-belt 23B preferably includes: the first left lateral surface 51L; the second left lateral surface 52L located below the first left lateral surface 51L; the first right lateral surface 51R; and the second right lateral surface 52R located below the first right lateral surface 51R. The left lateral surface 43L of the intermediate rubber layer 43 is included in the first left lateral surface 51L, and the right lateral surface 43R of the intermediate rubber layer 43 is included in the first right lateral surface 51R. The length of the portion of the core 46 exposed through the first left lateral surface 51L and the length of the portion of the core 46 exposed through the first right lateral surface 51R are each equal to or less than a half of the length of the core 46. The angle θ1 between the first left lateral surface 51L and the first right lateral surface 51R is equal to the angle α of the V groove 24 of the driving pulley 21, and is also equal to the angle of the V groove 27 of the driven pulley 22.

A portion of the left lateral surface 44L of the upper rubber layer 44 may be included in the first left lateral surface 51L, but in the present embodiment, the left lateral surface 44L of the upper rubber layer 44 is not included in the first left lateral surface 51L. The first left lateral surface 51L is defined by: the left lateral surface 43L of the intermediate rubber layer 43; and the left lateral surface 42La of a portion of the lower rubber layer 42. The left lateral surface 44L of the upper rubber layer 44 is inclined rightward with respect to a vertical plane as it extends upward. Similarly, the first right lateral surface 51R is defined by: the right lateral surface 43R of the intermediate rubber layer 43; and the right lateral surface 42Ra of a portion of the lower rubber layer 42. The right lateral surface 44R of the upper rubber layer 44 is inclined leftward with respect to a vertical plane as it extends upward. The left lateral surface 44L and the right lateral surface 44R of the upper rubber layer 44 are inclined toward a center as they extend upward.

In the present embodiment, a lower end position of each cog 58 of the upper rubber layer 44 and an upper end position of the first left lateral surface 51L coincide with each other. Alternatively, the lower end position of each cog 58 of the upper rubber layer 44 may be located above the upper end position of the first left lateral surface 51L. The same goes for the lower end position of each cog 58 of the upper rubber layer 44 and an upper end position of the first right lateral surface 51R.

An upper end position of each cog 50 of the lower rubber layer 42 and an upper end position of the second left lateral surface 52L coincide with each other. Alternatively, the upper end position of each cog 50 of the lower rubber layer 42 may be located above the upper end position of the second left lateral surface 52L, or may be located below the upper end position of the second left lateral surface 52L. The same goes for the upper end position of each cog 50 of the lower rubber layer 42 and an upper end position of the second right lateral surface 52R.

In the V-belt 23B according to the present embodiment, the lower rubber layer 42 is provided with a plurality of the cogs 50, and in addition, the upper rubber layer 44 is provided with a plurality of the cogs 58. As a result, deformation of the V-belt 23B can be more effectively prevented, and power transmission efficiency can be further enhanced.

### Third Embodiment, that discloses the combination of the features of claim 1

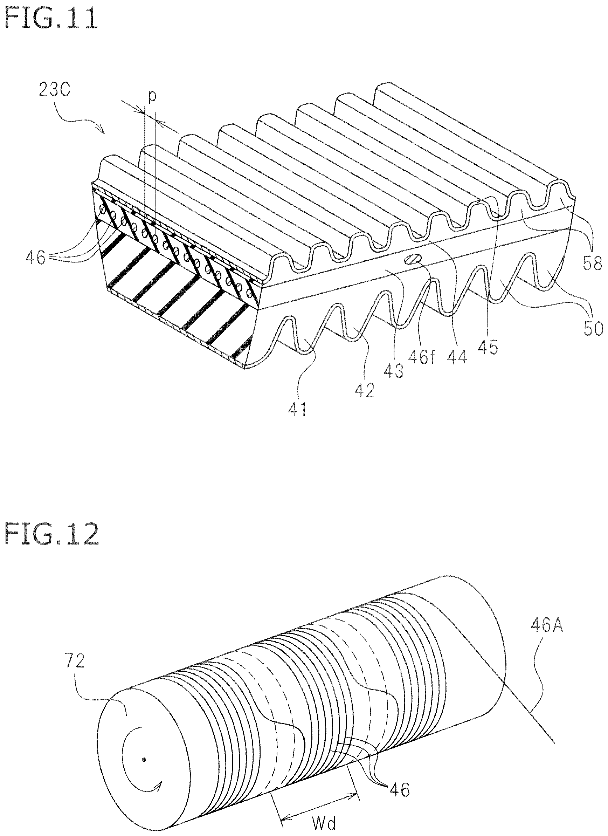

As illustrated in FIG. 11, a length of an exposed portion of the core 46 in a V-belt 23C according to a third preferred embodiment is shorter than the length of the exposed portion of the core 46 in the V-belt 23 according to the first embodiment and the length of the exposed portion of the core 46 in the V-belt 23B according to the second embodiment.

A V-belt fabrication method is not limited to any particular method. As illustrated in FIG. 12, in fabricating a V-belt, a single wire 46A by which the cores 46 will be provided is often wound around a rotating roller 72 provided with a lower rubber layer (not illustrated) at its surface. The wire 46A is spirally wound around the roller 72. A winding pitch of the wire 46A in this case serves as the pitch P (see FIG. 3) between the cores 46. The V-belts 23 and 23B according to the first and second embodiments and the V-belt 23C according to the present embodiment may also be fabricated by such a method. In that case, a plurality of the cores 46 arranged in a width direction of the V-belt are provided by the single wire 46A. After the wire 46A has been wound around the roller 72 and the intermediate rubber layer 43 has been provided, the upper rubber layer 44 is provided, and then lateral surfaces are cut off so that the resulting belt has a given belt width Wd.

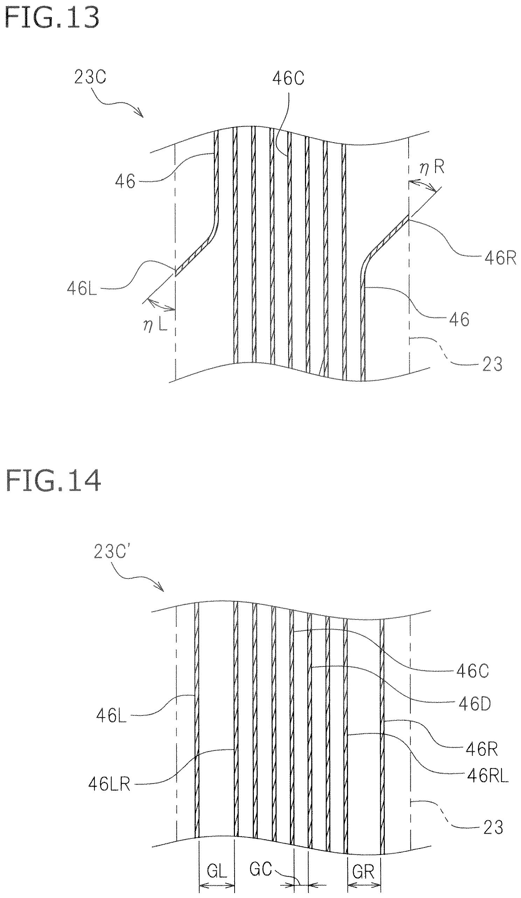

In the course of fabrication of the above-described V-belt, angles formed by the cores 46 with respect to the longitudinal direction of the V-belt can be appropriately set by changing a winding angle of the wire 46A as appropriate. For example, as illustrated in FIG. 13, the left core 46 may be bent greatly leftward at some point, and the right core 46 may be bent greatly rightward at some point. In this embodiment, an angle formed by a leftmost core 46L with respect to the longitudinal direction of the V-belt 23C is represented by ηL, and an angle formed by a rightmost core 46R with respect to the longitudinal direction of the V-belt 23C is represented by ηR. An angle formed by a centermost core 46C in the width direction of the V-belt 23C with respect to the longitudinal direction of the V-belt 23C is represented by ηC. In this case, the angles ηL and ηR may each be greater than the angle ηC. Note that in the present embodiment, the core 46C extends substantially in the longitudinal direction of the V-belt 23C, and therefore, ηC is approximately equal to 0. As used herein, the term "leftmost core 46L" refers to the core exposed at the left lateral surface, and the term "rightmost core 46R" refers to the core exposed at the right lateral surface.

The above-described method can shorten the lengths of the portions of the cores 46 exposed at the right and left lateral surfaces of the V-belt 23C without reducing the number of the cores 46 located in the center of the V-belt 23 (see an exposed portion 46f in FIG. 11). Hence, a pressure distribution of the V-belt can be further leveled out, and frictional forces of the right and left lateral surfaces can be increased. Accordingly, transmission performance can be further enhanced.

Note that in the course of fabrication of the above-described V-belt, pitches between the cores 46 in the V-belt can be appropriately set by changing winding pitches of the wire 46A as appropriate. For example, as illustrated in FIG. 14, an interval GL between the leftmost core 46L and a core 46LR adjacent to the leftmost core 46L and an interval GR between the rightmost core 46R and a core 46RL adjacent to the rightmost core 46R may be larger than an interval GC between the cores 46C and 46D adjacent to each other in a center of a V-belt 23C' in a width direction thereof. Although not illustrated, intervals between the cores adjacent to each other may be gradually reduced from a left portion of the V-belt 23C' to its center, and gradually increased from the center of the V-belt 23C' to its right portion.

The above-described method can reduce the number of the cores in the vicinity of right and left lateral surfaces of the V-belt 23C' without reducing the number of the cores located in the center of the V-belt 23'. Therefore, the lengths of the portions of the cores exposed at the right and left lateral surfaces of the V-belt 23C' can be shorter than the lengths of the exposed portions of the cores in the V-belt 23 according to the first embodiment and in the V-belt 23B according to the second embodiment. Hence, also in the V-belt 23C', a pressure distribution can be further leveled out, and frictional forces of the right and left lateral surfaces can be increased. Accordingly, transmission performance can be further enhanced.

### Fourth Embodiment

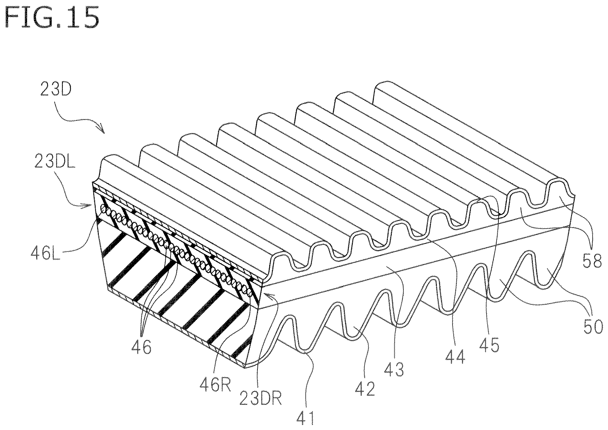

Disposition of cores in the vicinity of right and left lateral surfaces of a V-belt may be avoided so that the cores are not exposed at the right and left lateral surfaces of the V-belt. As illustrated in FIG. 15, a V-belt 23D according to a fourth preferred embodiment is provided so that the cores 46 are not exposed. In the V-belt 23D according to the present embodiment, the leftmost core 46L is disposed rightward of a left lateral surface 23DL, and the rightmost core 46R is disposed leftward of a right lateral surface 23DR. The core 46L is not exposed at the left lateral surface 23DL, and the core 46R is not exposed at the right lateral surface 23DR. The left lateral surface 23DL and the right lateral surface 23DR are provided only by rubber of the rubber layers 42, 43 and 44, and the canvases 41 and 45.

According to the present embodiment, the cores 46 are not exposed. Since the canvases 41 and 45 are small in thickness, portions of the V-belt 23D which come into contact with the sheaves 21A and 21B of the driving pulley 21 and the sheaves 22A and 22B of the driven pulley 22 are provided substantially only by the rubber of the rubber layers 42, 43 and 44. Therefore, a pressure distribution of the V-belt 23D can be further leveled out, and frictional forces of contact surfaces can be increased. Hence, transmission performance can be further enhanced. Compared with the third embodiment, the number of the cores 46 can be increased, and thus a sufficient tension can be ensured. Note that in the present embodiment, no interval is provided between the cores 46, and the cores 46 adjacent to each other are in contact with each other. Alternatively, an interval may naturally be provided between the cores 46.

In the V-belt 23 according to the first embodiment, the left lateral surface 45L of the upper canvas 45 defines a portion of the first left lateral surface 51L, and the right lateral surface 45R of the upper canvas 45 defines a portion of the first right lateral surface 51R. However, the left lateral surface 45L of the upper canvas 45 does not have to be included in the first left lateral surface 51L, and the right lateral surface 45R of the upper canvas 45 does not have to be included in the first right lateral surface 51R. In each of the foregoing embodiments, the left lateral surface 41L of the lower canvas 41 does not have to be included in the second left lateral surface 52L, and the right lateral surface 41R of the lower canvas 41 does not have to be included in the second right lateral surface 52R.

In each of the foregoing embodiments, the lower canvas 41 and the upper canvas 45 do not necessarily have to be provided. Alternatively, either or both of the lower canvas 41 and the upper canvas 45 may be omitted as appropriate.

## Claims

1. A V-belt comprising: an intermediate rubber layer (43) in which cores (46) are embedded; an upper rubber layer (44) provided above the intermediate rubber layer (43); and a lower rubber layer (42) provided below the intermediate rubber layer (43), wherein a length of a portion of the core (46) exposed through the left lateral surface (43L) of the intermediate rubber layer (43) and a length of a portion of the core (46) exposed through the right lateral surface (43R) of the intermediate rubber layer (43) are each equal to or less than a half of a length of the core (46), the cores (46) are arranged in a width direction (W) of the V-belt, and a leftmost core (46L) is a core exposed at the left lateral surface (43L), and a rightmost core (46R) is a core exposed at the right lateral surface (43R),
**characterised in that**
an angle (ηL) formed by the leftmost core (46L) with respect to a longitudinal direction (L) of the V-belt and an angle (ηR) formed by the rightmost core (46R) with respect to the longitudinal direction (L) of the V-belt are each greater than an angle (ηC) formed by the centermost core (46C) in the width direction (W) of the V-belt with respect to the longitudinal direction (L) of the V-belt.

2. A V-belt according to claim 1, wherein a length of a portion of the core (46) continuously exposed through the left lateral surface (43L) of the intermediate rubber layer (43) and a length of a portion of the core (46) continuously exposed through the right lateral surface (43R) of the intermediate rubber layer (43) are each equal to or less than a half of the length of the core (46).

3. A V-belt according to claim 1 or 2, wherein an interval (GL) between the leftmost core (46L) and the core (46LR) adjacent to the leftmost core (46L) and an interval (GR) between the rightmost core (46R) and the core (46RL) adjacent to the rightmost core (46R) are each larger than an interval (GC) between the cores (46C, 46D) adjacent to each other in a center of the V-belt in the width direction (W) thereof.

4. A V-belt according to claim 3, wherein the cores (46) adjacent to each other in the center of the V-belt in the width direction (W) thereof are in contact with each other.

5. A V-belt according to any one of claims 1 to 4, wherein rubber exists above and below the cores (46) in the intermediate rubber layer (43).

6. A V-belt according to any one of claims 1 to 7, wherein the lower rubber layer (42) is provided with a plurality of cogs (50) that extend in a width direction (W) of the V-belt.

7. A V-belt according to claim 6, wherein the upper rubber layer (44) is provided with a plurality of cogs (58) that extend in the width direction (W) of the V-belt.

8. A V-belt according to claim 7, wherein at least a portion of the upper rubber layer (44) comprises a left lateral surface (44L) or a right lateral surface (44R) which is inclined toward a center as it extends upward.

9. A V-belt according to any one of claims 1 to 8, wherein an interval is provided between the cores (46) adjacent to each other.

10. A V-belt according to claim 9, wherein the interval between the cores (46) adjacent to each other is equal to or greater than a diameter of the core (46).

11. A belt-type transmission comprising the V-belt (23) according to any one of claims 1 to 10,
the belt-type transmission comprising:
a driving pulley (21) comprising a first sheave (21A), and a second sheave (21B) that can be moved close to and away from the first sheave (21A), the driving pulley (21) being provided with a V-shaped groove (24) located between the first sheave (21A) and the second sheave (21B); and
a driven pulley (22) comprising a first sheave (22A), and a second sheave (22B) that can be moved close to and away from the first sheave (22A), the driven pulley (22) being provided with a V-shaped groove (27) located between the first sheave (22A) and the second sheave (22B),
wherein the V-belt (23) is wound around the driving pulley (21) so as to be sandwiched between the first sheave (21A) and the second sheave (21B) of the driving pulley (21), and is wound around the driven pulley (22) so as to be sandwiched between the first sheave (22A) and the second sheave (22B) of the driven pulley (22).

12. A straddle-type vehicle comprising the belt-type transmission (20) according to any one of claims 1 to 11.

## Patentansprüche

1. Ein V-Riemen, der umfasst: eine Zwischen-Gummi-Schicht (43), in der Kerne (46) eingebettet sind; eine obere Gummi-Schicht (44), die oberhalb der Zwischen-Gummi-Schicht (43) vorgesehen ist; und eine untere Gummi-Schicht (42), die unter der Zwischen-Gummi-Schicht (43) vorgesehen ist, wobei eine Länge eines Abschnitts des Kerns (46), der durch eine linke seitliche Fläche (43L) der Zwischen-Gummi-Schicht (43) freigelegt ist, und eine Länge eines Abschnitts des Kerns (46), der durch die rechte seitliche Fläche (43R) der Zwischen-Gummi-Schicht (43) freigelegt ist, jede gleich oder weniger ist als eine halbe Länge des Kerns (46), die Kerne (46) sind in einer Breiten-Richtung (W) des V-Riemens angeordnet, und ein am weitesten links angeordneter Kern (46L) ist ein Kern, der an der linken seitlichen Fläche (43L) freigelegt ist, und ein am weitesten rechts angeordneter Kern (46R) ist ein Kern, der an der rechten seitlichen Fläche (43R) freigelegt ist, **dadurch gekennzeichnet, dass** ein Winkel (ηL), der durch den am weitesten links angeordneten Kern (46L) mit Bezug auf eine Längs-Richtung (L) des V-Riemens ausgebildet, und ein Winkel (ηR), der durch den am weitesten rechts angeordneten Kern (46R) mit Bezug auf die Längs-Richtung (L) des V-Riemens ausgebildet ist, jeder größer ist als ein Winkel (ηC), der durch den am weitesten in der Mitte angeordneten Kern (46C) in der Breiten-Richtung (W) des V-Riemens mit Bezug auf die Längs-Richtung (L) des V-Riemens ausgebildet ist.

2. Ein V-Riemen gemäß Anspruch 1, wobei eine Länge eines Abschnitts des Kerns (46), der kontinuierlich durch die linke seitliche Fläche (46L) der Zwischen-Gummi-Schicht (43) freigelegt ist, und eine Länge eines Abschnitts des Kerns (46), der kontinuierlich durch die rechte seitliche Fläche (43L) der Zwischen-Gummi-Schicht (43) freigelegt ist, jede gleich mit oder weniger als eine Hälfte der Länge des Kerns (46) ist.

3. Ein V-Riemen gemäß Anspruch 1 oder 2, wobei ein Intervall (GL) zwischen dem am weitesten links angeordneten Kern (46L) und dem Kern (46LR) benachbart zu dem am weitesten links angeordneten Kern (46L), und ein Intervall (GR) zwischen dem am weitesten rechts angeordneten Kern (46R) und dem Kern (46RL) benachbart zu dem am weitesten rechts angeordneten Kern (46R), jedes größer ist als ein Intervall (GC) zwischen den Kernen (46C, 46D), die in einer Mitte des V-Riemens in der Breiten-Richtung (W) derselben benachbart zueinander.

4. Ein V-Riemen gemäß Anspruch 3, wobei die Kerne (46), die in der Mitte des V-Riemens in der Breiten-Richtung (W) desselben benachbart zueinander sind, in Kontakt miteinander sind.

5. Ein V-Riemen gemäß irgendeinem der Ansprüche 1 bis 4, wobei Gummi oberhalb und unterhalb der Kerne (46) in der Zwischen-Gummi-Schicht (43) existiert.

6. Ein V-Riemen gemäß irgendeinem der Ansprüche 1 bis 7, wobei die untere Gummi-Schicht (42) mit einer Mehrzahl von Zähnen (50) vorgesehen ist, die sich in einer Breiten-Richtung (W) des V-Riemens erstrecken.

7. Ein V-Riemen gemäß Anspruch 6, wobei die obere Gummi-Schicht (44) mit einer Mehrzahl von Zähnen (58) vorgesehen ist, die sich in der Breiten-Richtung (W) des V-Riemens erstrecken.

8. Ein V-Riemen gemäß Anspruch 7, wobei zumindest ein Abschnitt der oberen Gummi-Schicht (44) eine linke seitliche Fläche (44L) oder eine rechte seitliche Fläche (44R) umfasst, die zu einer Mitte geneigt sind, während sie sich nach oben erstreckt.

9. Ein V-Riemen gemäß irgendeinem der Ansprüche 1 bis 8, wobei ein Intervall zwischen den Kernen (46), die zueinander benachbart sind, vorgesehen ist.

10. Ein V-Riemen gemäß Anspruch 9, wobei das Intervall zwischen den Kernen (46), die zueinander benachbart sind, gleich oder größer als ein Durchmesser des Kerns (46) ist.

11. Ein Riemen-Typ-Getriebe, das den V-Riemen (23) gemäß irgendeinem der Ansprüche 1 bis 10, das Riemen-Typ-Getriebe umfasst:
eine Antriebs-Rolle (21), die eine erste Scheibe (21A), eine zweite Scheibe (21B), die nahe zu und von der ersten Scheibe (21A) weg bewegt werden kann, umfasst, die Antriebs-Rolle (21) ist mit einer V-förmigen Nut (24) vorgesehen, die zwischen der ersten Scheibe (21A) und der zweiten Scheibe (21B) angeordnet ist; und
eine angetriebene Rolle (22), die eine erste Scheibe (22A) und eine zweite Scheibe (22B), die nahe zu und von der ersten Scheibe (22A) weg bewegt werden kann, umfasst, die angetriebene Rolle (22) ist mit einer V-förmigen Nut (27) vorgesehen, die zwischen der ersten Scheibe (22A) und der zweiten Scheibe (22B) angeordnet ist,
wobei der V-Riemen (23) um die Antriebs-Rolle (21) gewickelt ist, so dass dieser zwischen der ersten Scheibe (21A) und der zweiten Scheibe (21B) der Antriebs-Rolle (21) aufgenommen ist, und um die angetriebene Rolle (22) gewickelt ist, so dass er zwischen der ersten Scheibe (22A) und der zweiten Scheibe (22B) der angetriebenen Rolle (22) gewickelt ist.

12. Ein Speiz-Sitz-Typ-Fahrzeug, das ein Riemen-Typ-Getriebe (20) gemäß irgendeinem der Ansprüche 1 bis 11 umfasst.

## Revendications

1. Courroie trapézoïdale comprenant : une couche intermédiaire de caoutchouc (43) dans laquelle sont intégrées des âmes (46), une couche supérieure de caoutchouc (44) disposée au-dessus de la couche intermédiaire de caoutchouc (43) et une couche inférieure de caoutchouc (42) disposée en dessous de la couche intermédiaire de caoutchouc (43), la longueur de la partie de l'âme (46) exposée au travers de la surface latérale gauche (43L) de la couche intermédiaire de caoutchouc (43) et la longueur de la partie de l'âme (46) exposée au travers de la surface latérale droite (43R) de la couche intermédiaire de caoutchouc (43) sont chacune inférieure ou égale à la moitié de la longueur de l'âme (46), les âmes étant agencées dans la direction de la largeur (W) de la courroie trapézoïdale, l'âme la plus à gauche (46L) étant une âme exposée au niveau de la surface latérale gauche (43L) et l'âme la plus à droite (46R) étant une âme exposée au niveau de la surface latérale droite (43R),
**caractérisée en ce que**
l'angle (ηL) formé par l'âme la plus à gauche (46L) par rapport à la direction longitudinale (L) de la courroie trapézoïdale, ainsi que l'angle (ηR) formé par l'âme la plus à droite (46R) par rapport à la direction longitudinale (L) de la courroie trapézoïdale sont chacun plus grand que l'angle (ηC) formé par l'âme la plus centrale (46C) dans la direction de la largeur (W) de la courroie trapézoïdale par rapport à la direction longitudinale (L) de la courroie trapézoïdale.

2. Courroie trapézoïdale selon la revendication 1, dans laquelle la longueur d'une partie de l'âme (46) exposée de manière continue au travers de la surface latérale gauche (43L) de la couche intermédiaire de caoutchouc (43) et la longueur d'une partie de l'âme (46) exposée de manière continue au travers de la surface latérale droite (43R) de la couche intermédiaire de caoutchouc (43) sont chacune inférieure ou égale à la moitié de la longueur de l'âme (46).

3. Courroie trapézoïdale selon la revendication 1 ou la revendication 2, dans laquelle un intervalle (GL) entre l'âme la plus à gauche (46L) et l'âme (46LR) adjacente à l'âme la plus à gauche (46L) et un intervalle (GR) entre l'âme la plus à droite (46R) et l'âme (46RL) adjacente à l'âme la plus à droite (46R) sont chacun plus grand que l'intervalle (GC) entre les âmes (46C, 46D) adjacentes l'une à l'autre au centre de la courroie trapézoïdale dans la direction de la largeur (W) de celle-ci.

4. Courroie trapézoïdale selon la revendication 3, dans laquelle les âmes (46) adjacentes l'une à l'autre au centre de la courroie trapézoïdale dans la direction de la largeur (W) de celle-ci sont en contact l'une avec l'autre.

5. Courroie trapézoïdale selon l'une quelconque des revendications 1 à 4, dans laquelle on trouve du caoutchouc au-dessus et en dessous des âmes (46) dans la couche intermédiaire de caoutchouc (43).

6. Courroie trapézoïdale selon l'une quelconque des revendications 1 à 5, dans laquelle la couche inférieure de caoutchouc (42) est munie d'une pluralité de dents (50) qui s'étendent dans la direction de la largeur (W) de la courroie trapézoïdale.

7. Courroie trapézoïdale selon la revendication 6, dans laquelle la couche supérieure de caoutchouc (44) est munie d'une pluralité de dents (58) qui s'étendent dans la direction de la largeur (W) de la courroie trapézoïdale.

8. Courroie trapézoïdale selon la revendication 7, dans laquelle aux moins une partie de la couche supérieure de caoutchouc (44) comprend une surface latérale gauche (44L) ou une surface latérale droite (44R) qui est inclinée vers le centre à mesure qu'elle s'étend vers le haut.

9. Courroie trapézoïdale selon l'une quelconque des revendications 1 à 8, dans laquelle un intervalle est prévu entre les âmes (46) adjacentes.

10. Courroie trapézoïdale selon la revendication 9, dans laquelle l'intervalle entre les âmes (46) adjacentes est supérieur ou égal au diamètre de l'âme (46).

11. Transmission à courroie comprenant la courroie trapézoïdale (23) conforme à l'une quelconque des revendications 1 à 10,
la transmission à courroie comprenant :
une poulie d'entraînement (21) comprenant une première poulie à gorge (21A) et une seconde poulie à gorge (21B) qui peut être déplacée à proximité et à distance de la première poulie à gorge (21A), la poulie d'entraînement (21) étant munie d'une rainure en forme de V (24) située entre la première poulie à gorge (21A) et la seconde poulie à gorge (21B), et
une poulie entraînée (22) comprenant une première poulie à gorge (22A) et une seconde poulie à gorge (22B) qui peut être déplacée à proximité et à distance de la première poulie à gorge (22A), la poulie entraînée (22) étant munie d'une rainure en forme de V (27) située entre la première poulie à gorge (22A) et la seconde poulie à gorge (22B),
dans laquelle la courroie trapézoïdale (23) est enroulée autour de la poulie d'entraînement (21) de sorte à être intercalée entre la première poulie à gorge (21A) et la seconde poulie à gorge (21B) de la poulie d'entraînement (21), et elle est enroulée autour de la poulie entraînée (22) de sorte à être intercalée entre la première poulie à gorge (22A) et la seconde poulie à gorge (22B) de la poulie entraînée (22).

12. Véhicule de type à selle comprenant la transmission à courroie (20) conforme à l'une quelconque des revendications 1 à 11.
